Europäisches Patentamt

(19) European Patent Office

Office européen des brevets

(11) Publication number: **0 354 356 B1**

(12) **EUROPEAN PATENT SPECIFICATION**

(45) Date of publication of patent specification:
28.08.91 Bulletin 91/35

(51) Int. Cl.⁵: **A23L 1/19, A23L 1/035**

(21) Application number: 89112489.3

(22) Date of filing: 07.07.89

(54) **A long-life semifinished food product useful as a vegetable substitute for whip cream in generic pastry articles and icecreams.**

(30) Priority: 10.08.88 IT 2169188

(43) Date of publication of application:
14.02.90 Bulletin 90/07

(45) Publication of the grant of the patent:
28.08.91 Bulletin 91/35

(84) Designated Contracting States:
AT BE CH DE ES FR GB GR IT LI LU NL SE

(56) References cited:
EP-A- 0 037 447
EP-A- 0 255 660
FR-A- 2 121 863
GB-A- 1 326 899

(73) Proprietor: COOPERLAT SOC. COOP. A.R.L.
Via Piandelmedico, 74
I-60035 Jesi (Ancona) (IT)

(72) Inventor: Luzietti, Dino
Via Paradiso, 9 bis
I-60035 Jesi (Ancona) (IT)
Inventor: Coacci, Settimio
Via Gramsci, 31
I-60030 Monte Roberto (Ancona) (IT)

(74) Representative: Vannini, Torquato et al
JACOBACCI-CASETTA & PERANI S.p.A. 7 Via
Visconti di Modrone
I-20122 Milan (IT)

## Description

This invention relates to a long-life semifinished food product particularly useful as a substitute for whip cream in generic pastry articles and icecreams.

More particularly, this invention is concerned with a semifinished food product of a type which comprises water, hydrogenated vegetable fats, and sugar, in suitable proportions.

The invention further concerns a method of making a semifinished food product of the above-specified type on an industrial scale.

It is a known fact that, in providing long-term preservation food products on an industrial scale, a prerequisite is that they be kept wholesome inasmuch as, generally within a very short time period, food products are liable to undergo rapid and substantial alterations of the bacteria-induced and chemical types which result in an unacceptable drastic degradation of their original organoleptic properties and, what is even worse, to turn toxic. A second, no less fundamental requisite is that they ought to retain their original organoleptic properties for a long time period, in particular their taste, flavor, consistency, appearance, and physical properties, the fast deterioration of which is a well-recognized problem in the art.

Currently available, in an effort to meet the demand for long-life food products at least in part, are products whose preservability (wholesome and organoleptic properties) is ensured either by sterilization techniques (at 115-125°C for 5 to 20 minutes) or a U.H.T. process (at 135-150°C for 2 to 30 seconds) combined with homogenization at 100-250 bars.

Such techniques have some recognized drawbacks as relates the stability of emulsions having a high fat content, with consequent gelling/separation, decreased or increased viscosity, loss of physical properties (rise), and the inception of undesiderable side processes (saponification, etc.).

Such shortcomings usually make their appearance after a preservation period which may vary according to storage temperature but is in any case limited in time.

The problem underlying this invention is to provide a long-life semifinished food product, as a vegetable substitute for whip cream, which can retain, throughout its shelf life, wholesome characteristics, organoleptic characteristics, and chemiophysical — i.e. rising — properties comparable with those it exhibits when freshly prepared, and is such that it can be circulated through normal sale outlets at a controlled temperature (22°C or lower) without involving any special and expensive safeguarding techniques, such as the like of a cold line.

This problem is solved according to the invention by a long-life semifinished food product comprising water, hydrogenated vegetable fats, milk proteins, at least one stabilizer, and sugar, being characterized in that it is an oil in water emulsion comprising an emulsifying mixture including mono- and di-acetyltartaric esters of the mono- and di-glycerides of fatty acids, lactic esters of the mono- and di-glycerides of fatty acids, and soy lecithin, said emulsifying mixture being provided in an amount ranging from 0.2% to 1.5% by weight of the overall weight of the semifinished food product.

In particular, and in accordance with a further aspect, the water that goes into the making of the semifinished food product of this invention has a hardness of about 1 ppm $CaCO_3$ (about 10 French degrees) or lower and is present in the semifinished food product in a by-weight amount ranging from 55% to 65%, preferably of 60%, of the overall weight of said semifinished product.

The hydrogenated vegetable fats used in the preparation of the inventive semifinished food product are those having their melting point in the 30° to 40°C range, and are preferably hydrogenated vegetable fats from coconut or palm nut oil and mixtures thereof. Advantageously, the amount of the hydrogenated fats employed varies between 15% and 35% by weight.

The milk proteins used in the semifinished food product of this invention are preferably obtained from or made available by sodium caseinate, either skim or whole powdered milk, in amounts within the 0.4% to 7% range by weight of the overall weight of the semifinished product, sodium caseinate being most preferred.

The stabilizer used in the semifinished food product of this invention is preferably selected from a group comprising sorbitol and hydroxypropylcellulose in amounts ranging from 0.1% to 2% by weight of the overall weight of said semifinished product.

The sorbitol may be utilized in either the syrup or powder forms and in by-weight amounts ranging from 0.5% to 2%, while hydroxypropylcellulose is preferably utilized in by-weight amounts within the 0.1% to 0.4% range.

The inventive semifinished food product may also comprise natural flavors and natural coloring matter such as, of preference, carotene, as well as kitchen salt.

The emulsifying mixture used in accordance with the basic teaching of this invention, and especially, primarily the presence therein of mono- and di-acetyltartaric esters of the mono- and di-glycerides of fatty acids, has unexpectedly shown an ability to yield a very fine and stable emulsion (oil in water) of all the components of said semifinished food product, which emulsion withstood the sterilization ond homogenization process quite well. Furthermore, inhibited showed to be in this emulsion, for even quite long time periods of up to 8 months and longer, any inception of saponification or another comparable emulsion degrading, separating, or destabilizing effect.

Even if the chemiophysical mechanics which enables the acetyltartaric esters of fatty acids to yield the above favorable result has not been fully understood, it is believed that the unexpected, effective emulsifying action revealed is also due to a synergic effect between the various emulsifying agents (which make up the mixture just described) and the softened water.

Additionally to the advantage of retention over time of wholesome characteristics, organoleptic characteristics, and physical properties (rise) as exhibited when freshly prepared, the semifinished food product of this invention has a shorter structure than similar conventional products which closely resembles that of whip cream.

The invention features and advantages may be more clearly appreciated from the following description of an exemplary embodiment of a method of preparing the semifinished food product according to the invention, where all the parts mentioned are parts by weight.

## Example

In a double-walled vessel equipped with a slow speed stirrer and a turbine, 20 l of water having a hardness 0.2 ppm CaCO₃ (2 French degrees) is heated to 55°C. On reaching the predetermined temperature and under powerful stirring, 0.2 parts by weight are then added of hydroxypropylcellulose, followed by cold softened water to an overall amount of water of 60 l. Stirring is maintained until the hidroxypropylcellulose is fully dissolved, and on the temperature reaching 65°C, under powerful stirring, there are added 1 part sodium caseinate or 4 parts powdered milk and 0.4 parts mono- and di-acetyltartaric esters of the mono- and di-glycerides of fatty acids (E 472e emulsifier) and lactic esters of the mono- and di-glycerides of fatty acids (E 472b emulsifier).

While still maintaining a powerful stirring action, and raising the mixture temperature to 70°C, 25 parts of hydrogenated vegetable fats from coconut and palm nut oil, as previously brought to melting by heating at about 50°C and to which there have been added 0.2 parts fluidic soy lecithin and natural carotene, are loaded.

Once the desired emulsion is obtained, the same is additivated with 10 parts sugar, 2 parts sorbitol, and a mixture comprising kitchen salt and natural flavors.

The semifinished food product thus obtained is then taken to a UHT sterilization step which also includes a homogenization step at 100/250 bars to yield a substantial reduction in the fat blobs on the order of 0.5-2 micrometers, as well as a final cooling step down to a lower temperature than 20°C.

Thereafter, the semifinished product of this invention is packed in sterilized containers at an aseptic packaging station.

The resulting packaged semifinished product could be delivered to normal sale outlets by controlling its temperature within a range not to exceed 22°C. It becomes possible, therefore, to avoid the use of the expensive current cold or freezing storage techniques.

## Claims

1. A long-life semifinished food product for generic pastry articles and icecreams as a substitute for whip cream, comprising water, hydrogenated vegetable fats, milk proteins, at least one stabilizer, and sugar, characterized in that it is an oil in water emulsion comprising an emulsifying mixture including mono- and di-acetyltartaric esters of the mono- and di-glycerides of fatty acids, lactic esters of the mono- and di-glycerides of fatty acids, and soy lecithin, said emulsifying mixture being provided in an amount ranging from 0.2% to 1.5% by weight of the overall weight of the semifinished food product.

2. A semifinished food product according to Claim 1, characterized in that said water has a hardness not exceeding approximately 1 ppm CaCO₃ (10 French degrees).

3. A semifinished food product according to Claim 2, characterized in that said softened water is provided in an amount ranging from 55% to 65% by weight, preferably of 60% by weight.

4. A semifinished food product according to Claim 1, characterized in that said hydrogenated vegetable fats are those having melting point within the 30° to 40°C range and are provided in by-weight amounts within the 15% to 35% range.

5. A semifinished food product according to Claim 4, characterized in that said hydrogenated vegetable fats are fats from coconut, palm nut oil, and mixtures thereof.

6. A semifinished food product according to Claim 1, characterized in that said milk proteins are either obtained from or made available by sodium caseinate, skim or whole powdered milk, and are provided in amounts within the range of 0.4% to 7% by weight.

7. A semifinished food product according to Claim 1, characterized in that said stabilizer is selected from the group comprising sorbitol and hydroxipropylcellulose and is provided in an amount within the 0.1% to 2% range by weight.

8. A semifinished food product according to Claim 7, characterized in that said stabilizer is sorbitol in either syrup or powder form and is provided in an amount within the 0.5% to 2% range by weight.

9. A semifinished food product according to Claim 7, characterized in that said stabilizer is hydroxipropylcellulose and is provided in an amount within the 0.1% to 0.4% range by weight.

10. A method of preparing a long-life semifinished food product for pastry articles and icecreams, as a vegetable substitute for whip cream, characterized in that it comprises the successive steps of,

dissolving in water which has a hardness not exceeding approximately 1 ppm CaCO₃ as heated to about 55°C a by-weight amount of 0.1% to 2% of a stabilizer selected from sorbitol and hydroxipropylcellulose, while maintaining a temperature of about 65° to 70°C and under powerful stirring, adding 0.4% to 7% by weight of milk proteins as made available by either sodium caseinate or powdered milk and their mixtures, 0.2% to 1% by weight of mono- and di-acetyltartaric esters of the mono- and di-glycerides of fatty acids and lactic esters of the mono- and di-glycerides of fatty acids,

adding to the emulsion, as maintained at about 70°C under powerful stirring, 15% to 35% by weight of hydrogenated vegetable fats from coconut, palm nut oil or mixtures thereof, as previously melted by the application of heat and additivated with fluidic soy lecithin,

additivating the resulting emulsion with sugar, sorbitol, and optionally such additives as natural flavors, natural coloring matter, and kitchen salt,

sterilizing and homogenizing said emulsion, and cooling the sterilized emulsion yield down to below 20°C.

11. A method according to Claim 10, characterized in that the emulsion homogenization step is carried on until the fat blob therein are reduced in size to within the range of 0.5 to 2.0 micrometers.

**Patentansprüche**

1. Langlebiges, halbfertiges Nahrungsmittel als Schlagsahneersatz für Konditoreiwaren und Eiskrem, bestehend aus Wasser, hydrierten Pflanzenfetten, Milchproteinen, mindestens einem Stabilisator und Zucker, dadurch gekennzeichnet, daß es aus einer Öl- in Wasseremulsion besteht, die eine emulsionsfähige Mischung enthält, die aus mono- und di-acetyl-Weinsteinsäure-Estern der Mono- und Diglyceride der Fettsäuren sowie aus Milchsäureestern der Mono- und Diglyceride der Fettsäuren und aus Sojalecithin besteht, wobei diese emulgierbare Mischung in einer Menge zwischen 0,2 und 1,5 Gewichtsprozent des gesamten Gewichtes des halbfertigen Nahrungsmittels vorgesehen ist.

2. Halbfertiges Nahrungsmittel nach Anspruch 1, dadurch gekennzeichnet, daß das Wasser eine Härte besitzt, die etwa 1 ppm CaCO₃ (10 französische Grad) nicht überschreitet.

3. Halbfertiges Nahrungsmittel nach Anspruch 2, dadurch gekennzeichnet, daß das weiche Wasser in einer Größenordnung zwischen 55 und 65 Gewichtsprozent, vorzugsweise 60 Gewichtsprozent, vorgesehen ist.

4. Halbfertiges Nahrungsmittel nach Anspruch 1, dadurch gekennzeichnet, daß die hydrierten Pflanzenfette solche sind, die einen Schmelzpunkt zwischen 30° und 40°C besitzen und in einer Menge zwischen 15 und 35 Gewichtsprozent vorgesehen sind.

5. Halbfertiges Nahrungsmittel nach Anspruch 4, dadurch gekennzeichnet, daß die hydrierten Pflanzenfette aus Fetten aus Kokosnuß, Palmennußöl und Mischungen davon bestehen.

6. Halbfertiges Nahrungsmittel nach Anspruch 1, dadurch gekennzeichnet, daß die Milchproteine gewonnen werden, oder zugängig gemacht werden durch Natriumcasein, entrahmte oder gänzlich pulverisierte Milch und daß sie in einer Menge von 0,4 bis 7 Gewichtsprozent vorgesehen sind.

7. Halbfertiges Nahrungsmittel nach Anspruch 1, dadurch gekennzeichnet, daß der Stabilisator aus der Gruppe ausgewählt wird, die Sorbit und Hydroxipropylcellulose enthält und in einer Menge zwischen 0,1 und 2 Gewichtsprozent vorgesehen ist.

8. Halbfertiges Nahrungsmittel nach Anspruch 7, dadurch gekennzeichnet, daß der Stabilisator Sorbit entweder in Sirup- oder Pulverform ist und in einer Menge von 0,5 bis 2 Gewichtsprozent vorgesehen ist.

9. Halbfertiges Nahrungsmittel nach Anspruch 7, dadurch gekennzeichnet, daß der Stabilisator Hydroxipropylcellulose ist und in einer Menge zwischen 0,1 und 0,4 Gewichtsprozent vorgesehen ist.

10. Verfahren zur Herstellung eines langlebigen, halbfertigen Nahrungsmittels als ein pflanzlicher Ersatz für Schlagsahne für Konditorwaren und Eiskrem, dadurch gekennzeichnet, daß folgende aufeinanderfolgende Schritte vorgesehen sind :

Lösen eines Stabilisators, der aus Sorbit und Hydroxipropylcellulose ausgewählt und in einer Menge zwischen 0,1 und 2 Gewichtsprozent vorgesehen ist, in Wasser mit einer Härte die ungefähr 1 ppm CaCO₃ nicht überschreitet und auf etwa 55°C erwärmt ist,

Zumischen von 0,4 bis 7 Gewichtsprozent Milchproteinen unter Aufrechterhaltung einer Temperatur zwischen 65 und 70°C und unter kräftigem Umrühren, die entweder aus

Natriumcasein oder aus Milchpulver und ihren Mischungen gewonnen werden, sowie von 0,2 bis 1 Gewichtsprozent mono- und di-acetyl-Weinsteinsäure-Estern der Mono- und Diglyceride von Fettsäuren und Milchsäureestern der Mono- und Diglyceride von Fettsäuren,

Zumischen von 15 bis 35 Gewichtsprozent hydrierter Pflanzenfette aus Kokosnuß, Palmennußöl oder Mischungen davon, die vorher durch Anwendung von Hitze geschmolzen und mit flüssigem Sojalecithin angereichert worden sind, zu der Emulsion, die unter kräftigem Rühren auf etwa 70°C gehalten wird,

Anreichern der resultierenden Emulsion mit Zucker, Sorbit und vorzugsweise mit Zusätzen wie natürlichen Geschmackgebern, natürlichen Farbgebern und Küchensalz,

sterilisieren und homogenisieren dieser Emulsion und Abkühlen der erreichten sterilisierten Emulsion auf unter 20°C.

11. Verfahren nach Anspruch 10, dadurch gekennzeichnet, daß der Schritt der Homogenisierung der Emulsion weitergeführt wird, bis die enthaltenen Fettklümpchen in ihrer Größenordnung auf den Bereich zwischen 0,5 und 2 Mikrometer reduziert sind.

## Revendications

1. Produit alimentaire semi-fini à longue durée de vie comme substitut de la crème fouettée dans des produits de pâtisserie et des glaces, comportant de l'eau, des graisses végétales hydrogénées, des protéines du lait, au moins un agent de stabilisation, et du sucre, caractérisé en ce qu'il s'agit d'une émulsion d'huile dans l'eau comportant un mélange émulsifiant comprenant des esters mono- et di-acétyltartriques des mono- et di-glycérides d'acides gras, des esters lactiques des mono- et di-glycérides d'acides gras, et de la lécithine de soja, le dit mélange émulsifiant étant prévu dans une quantité allant de 0,2% à 1,5% en poids du poids total du produit alimentaire semi-fini.

2. Produit alimentaire semi-fini selon la revendication 1, caractérisé en ce que la dite eau a une dureté qui ne dépasse pas approximativement 1 ppm de $CaCO_3$ (10 degrés français).

3. Produit alimentaire semi-fini selon la revendication 2, caractérisé en ce que la dite eau adoucie est prévue dans une quantité allant de 55% à 65% en poids, de préférence de 60% en poids.

4. Produit alimentaire semi-fini selon la revendication 1, caractérisé en ce que les graisses végétales hydrogénées sont celles ayant un point de fusion dans la plage de 30°C à 40°C et sont prévues dans des quantités en poids dans la plage de 15% à 35%.

5. Produit alimentaire semi-fini selon la revendication 4, caractérisé en ce que les dites graisses végétales hydrogénées sont des graisses provenant de la noix de coco, de l'huile de palme, et de mélange de celles-ci.

6. Produit alimentaire semi-fini selon la revendication 1, caractérisé en ce que les dites protéines du lait sont obtenues à partir de ou disponibles au moyen de caséinate de sodium, de lait écrémé ou entier en poudre, et sont prévues dans des quantités dans la plage de 0,4% à 7% en poids.

7. Produit alimentaire semi-fini selon la revendication 1, caractérisé en ce que le dit agent de stabilisation est choisi dans le groupe comprenant le sorbitol et l'hydroxipropylcellulose et est prévu dans une quantité dans la plage de 0,1% à 2% en poids.

8. Produit alimentaire semi-fini selon la revendication 7, caractérisé en ce que le dit agent de stabilisation est du sorbitol en sirop ou en poudre et est prévu dans une quantité dans la plage de 0,5% à 2% en poids.

9. Produit alimentaire semi-fini selon la revendication 7, caractérisé en ce que le dit agent de stabilisation est de l'hydroxipropylcellulose et est prévu dans une quantité dans la plage de 0,1% à 0,4% en poids.

10. Procédé de préparation d'un produit alimentaire semi-fini à longue durée de vie comme substitut végétal de la crème fouettée dans des produits de pâtisserie et des glaces, caractérisé en ce qu'il comporte les étapes successives de,

dissolution dans de l'eau qui a une dureté qui ne dépasse pas approximativement 1 ppm de $CaCO_3$, chauffée à environ 55°C, d'une quantité en poids de 0,1% à 2% d'un agent de stabilisation choisi parmi le sorbitol et l'hydroxipropylcellulose,

tout en maintenant une température de environ 65° à 70°C et avec un brassage puissant, addition de 0,4% à 7% en poids de protéines du lait disponibles sous la forme de caséinate de sodium ou de lait en poudre et leurs mélanges, de 0,2% à 1% en poids d'esters mono- et di-acétyltartriques des mono- et di-glycérides d'acides gras et esters lactiques des mono- et di-glycérides d'acides gras,

addition à l'émulsion, maintenue à environ 70°C avec un brassage puissant, de 15% à 35% en poids de graisses végétales hydrogénées provenant de la noix de coco, de l'huile de palme, et de mélange de celles-ci, préalablement fondues par l'application de chaleur et additionnées de lécithine de soja fluide,

addition à l'émulsion résultante de sucre, de sorbitol, et éventuellement d'additifs tels que des aromes naturels, du colorant naturel, et du sel de cuisine,

stérilisation et homogénéisation de la dite émulsion, et

refroidissement de l'émulsion stérilisée jusqu'à moins de 20°C.

11. Procédé selon la revendication 10, caractérisé en ce que la dite étape d'homogénéisation d'émulsion est réalisée jusqu'à ce que les particules de graisse soient réduites à une taille dans la plage de 0,5 à 2 micromètres.